# EUROPEAN PATENT APPLICATION

(11) **EP 4 421 359 A1**
(43) Date of publication of application: **28.08.2024**
(21) Application number: 22897748.4
(22) Date of filing: 21.11.2022
(51) Int. Cl.: F16K 1/00, F16K 1/36, F16K 27/02, F16K 27/08

(54) **GLOBE VALVE**

(30) Priority: 23.11.2021 CN 202122893090 U
(71) Applicant: Zhejiang Dunan Artificial Environment Co., Ltd., Shaoxing Zhejiang 311835 (CN)
(72) Inventor: HE, Shanjun, Shaoxing, Zhejiang 311835 (CN)
(74) Representative: Meyer-Dulheuer MD Legal Patentanwälte PartG mbB
(86) International application number: PCT/CN2022/133181
(87) International publication number: WO 2023/093665

(57) **Abstract**

A globe valve (100) is provided. The globe valve includes a valve body (10) and a valve core (20). The valve core (20) is disposed in the valve body (10); a hardness difference is formed between the valve body (10) and the valve core (20); and an end of the valve core (20) extending into the valve body (10) can abut against the valve body (10), such that the valve core (20) or the valve body (10) is deformed.

## Description

### CROSS-REFERENCE TO RELATED APPLICATIONS

This application claims priority to Chinese patent application No. 202122893090.X, filed on November 23, 2021, and titled "GLOBE VALVE", the content of which is hereby incorporated by reference in its entirety.

### TECHNICAL FIELD

The present invention relates to the field of refrigerant flow rate control, in particular, to a globe valve.

### BACKGROUND

In an air-conditioning system, globe valves are mainly configured to connect an indoor unit to an outdoor unit. When the indoor unit is not assembled and connected to the outdoor unit, the globe valve is disposed on the outdoor unit to block the refrigerant in the outdoor unit. When the indoor unit is connected to the outdoor unit, one end of the indoor unit connected to a pipeline is disposed on the globe valve, so that the refrigerant can circulate between the indoor unit and the outdoor unit.

Currently, the valve core of the globe valve and the valve body of the globe valve are generally made of the same material (e.g., brass), so that a Vickers-hardness of the valve core and a Vickers-hardness of the valve body are the same. The globe valve is mounted on the outdoor unit, and utilizes a resistive seal between the valve core and the valve body to seal against the refrigerant on the outdoor unit. The globe valve is mounted on the outdoor unit, and utilizes a pressure-tight seal between the valve core and the valve body to seal against the refrigerant in the outdoor unit. Due to the equal Vickers-hardness between the valve core and the valve body, the sealing effect between the valve core and the valve body is poor when the valve core abuts against the valve body, which can easily cause refrigerant leakage, and cannot meet the requirements of refrigerant sealing in the outdoor unit before the installation of air-conditioners.

### SUMMARY

In the embodiments of the present invention, a glove valve configured for solving the problems above is provided. Sealing effect between a valve core of the globe valve and a valve body of the globe valve is good.

A globe valve, including a valve body and a valve core disposed in the vale body, is provided. A difference is preset between a Vickers-hardness of the valve body and a Vickers-hardness of the valve core. An end of the valve core extending into the valve body is capable of abutting against and being pressed on the valve body, so as to cause a deformation of the valve core or the valve body.

In the present invention, by providing a globe valve having an above rational structure, the globe valve can make full use of the Vickers-hardness difference between the valve core and the valve body, so that the valve core and the valve body can deform when the valve core abuts against the valve body. Thus, sealing effect of a pressing contact surface between the valve core and the valve body can be ensured, which in turn ensures the sealing effectiveness of the globe valve and prevents refrigerant leakage when the globe valve is disposed on the outdoor unit.

In some embodiments, the valve core is provided with a sealing surface, the valve body is provided with a sealing step matching with the sealing surface, and the vale core is capable of driving the sealing surface to abut against and press on the sealing step of the valve body, so as to cause assembly and sealing between the valve core and the valve body.

It could be understood that by providing the structure above, pressing and matching between the valve core and the valve body can be realized, which has effect of simplifying the structure and facilitating pressing and matching between the valve core and the valve body.

In some embodiments, the sealing surface is cone-shaped, and the sealing surface is capable of abutting against an edge of the sealing step.

It could be understood that since the sealing surface is cone-shaped and the sealing surface is capable of abutting against an edge of the sealing step on the valve body, the sealing surface of the valve core and the sealing step of the valve body deform when the sealing surface of the valve core abuts against and matches with the sealing step of the valve body, thereby ensuring assembly tightness between the valve core and the valve body.

In some embodiments, the difference preset between the Vickers-hardness of the valve body and the Vickers-hardness of the valve core is in a range of 50 hv to 200 hv.

It could be understood that, since the difference preset between the Vickers-hardness of the valve body and the Vickers-hardness of the valve core is in the range of 50 hv to 200 hv, the valve core or the valve body can deform when the valve core abut against and matches with the valve body, thereby further meeting tightness when the valve core is disposed in the valve body.

In some embodiments, the Vickers-hardness of the valve body is greater than the Vickers-hardness of the valve core, and the valve body is capable of abutting against the valve core, so as to cause deformation of the valve core.

It could be understood that with the structure above, Vickers-hardness different is set between the valve body and the valve core, so that the valve core deforms when the valve core abuts against the valve body.

In some embodiments, the valve body is made of stainless steel; and the valve core is made of brass or aluminum.

It could be understood that with the structure above, a material of the valve body and a material of the valve core are determined. Thus, in the premise of meeting the Vickers-hardness difference between the valve body and the valve core, the valve body and the valve core can be locally sourced, which facilitates preparation of the valve body and the valve core and lowers the production cost.

In some embodiments, the valve body is made from a stainless tube or a stainless stick.

It could be understood that with the structure above, a material of the valve body is determined, which can further facilitate production of the valve body.

In some embodiments, the valve body is made of brass and the valve core is made of aluminum.

It could be understood that a material of the valve body and a material of the valve core are determined. Thus, in the premise of meeting the Vickers-hardness difference between the valve body and the valve core, the valve body and the valve core can be locally sourced, which facilitates preparation of the valve body and the valve core and lowers the production cost.

In some embodiments, the Vickers-hardness of the valve body is smaller than the Vickers-hardness of the valve core, and the valve core is capable of abutting against the valve body, so as to cause deformation of the valve body.

It could be understood that with the structure above, Vickers-hardness different is set between the valve body and the valve core, so that the valve body deforms when the valve core abuts against and presses on the valve body.

In some embodiments, the globe valve further includes a sealing valve cover disposed on the valve body; and, a sealing ring is embedded between the valve core and the valve body, and the sealing ring and the sealing valve cover are capable of allowing assembly and sealing between the valve core and the valve body.

It could be understood that with the structure above, when the globe valve is configured for connection and communication between the outdoor unit and the indoor unit, that is, when the valve core release the pressing and matching between the valve core and the valve body, the sealing valve cover and the sealing ring can be configured to realize sealing of the assembly between the valve core and the valve body, so as to ensure the sealing effect of the refrigerant circulates in the globe valve.

Details of one or more embodiments of the present invention are set forth in the accompanying drawings and description below. Other features, objects, and advantages of the present invention will become apparent from the description, the accompanying drawings, and the claims.

### BRIEF DESCRIPTION OF THE DRAWINGS

Reference may be made to one or more of the accompanying drawings in order to better describe and illustrate those embodiments and/or examples of the invention disclosed herein. The additional details or examples used to describe the accompanying drawings should not be considered a limitation on the scope of any of the disclosed inventions, the embodiments and/or examples presently described, and the best mode of these inventions as presently understood.
FIG. 1 is a structural schematic diagram of a globe valve in an embodiment of the present invention.
FIG. 2 is a partial enlarged view of P portion in FIG. 1.

In the figures, 100 presents a globe valve; 10 presents a valve body; 11 presents a sealing step; 111 presents an edge; 20 presents a valve core; 21 presents a sealing surface; 30 presents a sealing valve cover; and 40 presents a sealing ring.

### DETAILED DESCRIPTION

The technical solutions in the embodiments of the present invention will be clearly and completely described below in conjunction with the accompanying drawings in the embodiments of the present invention. Obviously, the described embodiments are only a part of the embodiments of the present invention, but not all of the embodiments. Based on the embodiments in the present invention, all other embodiments obtained by a person of ordinary skill in the art without making creative labor fall within the scope of protection of the present invention.

It is noted that when an element is said to be "disposed" on another element, it may be disposed directly on the other element or there may be a centered element. When an element is said to be "set on" another element, it may be set directly on the other element or there may be both centered elements. When an element is considered to be "fixed to" another element, it may be fixed directly to the other element or there may be both centered elements.

Unless otherwise defined, all technical and scientific terms used herein have the same meaning as commonly understood by those skilled in the art of the present invention. Terms used in the description of the present invention are used only for the purpose of describing specific embodiments and are not intended to limit the present invention. The term "and/or" as used herein includes any and all combinations of one or more of the relevant listed items.

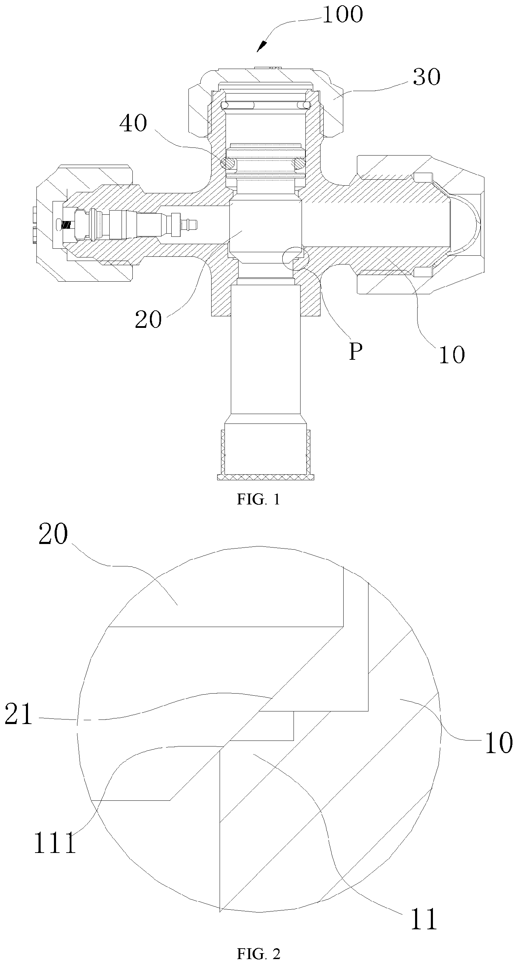

Referring to FIG.1 and FIG.2, an embodiment of the present invention provides a globe valve 100, which includes a valve body 10 and a valve core 20.

The valve core 20 is disposed in the valve body 10. Specifically, the valve core is threadly disposed in the valve body 10, so as to realize assembly and connection between the valve core 20 and the valve body 10, thereby facilitating disposing the valve core 20 in the valve body 10.

In some embodiments, a difference is preset between a Vickers-hardness of the valve body 10 and a Vickers-hardness of the valve core 20, that is, a Vickers-hardness of the valve body 10 and a Vickers-hardness of the valve core 20 are different. Specifically, the valve body 10 and the valve core 20 can be made of two different kinds of materials. In addition, an end of the valve core 20 extending in the valve body 10 can abut against and press on the valve body 10, so as to cause deformation of the valve core 20 or the valve body 10. In some embodiments, deformation of the valve core 20 or the valve body 10 means that the valve body 10 can be embedded in the valve core 20 after the valve core 20 deforms.

In some embodiments, deformation of the valve core 20 or the valve body 10 means that the valve core 20 can be embedded in the valve body 10 after the valve body 10 deforms.

It could be understood that in the present invention, the globe valve 100 can make full use of the Vickers-hardness difference between the valve core 20 and the valve body 10. In addition, when the valve core 20 is disposed in and abuts against the valve body 10, the valve core 20 or the valve body 10 can deform. Thus, sealing effect of a pressing contact surface between the valve core 20 and the valve body 10 can be ensured, which in turn ensures the sealing effectiveness of the globe valve 100 and prevents refrigerant leakage when the globe valve 100 is disposed on the outdoor unit (not shown in the figures).

In some embodiments, the valve core 20 is provided with a sealing surface 21, the valve body 10 is provided with a sealing step 11 matching with the sealing surface 21, and the vale core is capable of driving the sealing surface 21 to abut against the sealing step 11 of the valve body 10, so as to cause assembly and sealing between the valve core 20 and the valve body 10. In this way, the assembly and sealing between the valve core 20 and the valve body 10 are be realized, which has effect of simplifying the structure and facilitating pressing and matching between the valve core 20 and the valve body 10.

In some embodiments, the sealing surface 21 is cone-shaped, and the sealing surface 21 is capable of abutting against an edge 211 of the sealing step 11. In this way, the sealing surface 21 of the valve core 20 and the sealing step 11 of the valve body 10 deform when the sealing surface 21 of the valve core 20 abuts against the sealing step 11 of the valve body 10, thereby ensuring assembly tightness between the valve core 20 and the valve body 10.

In some embodiments, the difference preset between the Vickers-hardness of the valve body 10 and the Vickers-hardness of the valve core 20 is in a range of 50 hv to 200 hv. In this way, when the valve core 20 abuts against and matches with the valve body 10, the valve core 20 or the valve body 10 can deform, thereby further meeting tightness when the valve core 20 is disposed in the valve body10.

In some embodiments, a Vickers-hardness of the valve body 10 is greater than a Vickers-hardness of the valve core 20, and the valve body 10 is capable of abutting against the valve core 20, so as to cause deformation of the valve core 20. In this way, Vickers-hardness different is set between the valve body 10 and the valve core 20, so that the valve core 20 deforms when the valve core 20 abuts against the valve body 10.

In some embodiments, the valve body 10 is a stainless steel component; and the valve core 20 is a brass component or an aluminum component. That is, in the present embodiment, the valve body 10 is made of stainless steel materials, and the valve core 20 is made of brass materials or aluminum materials, accordingly. In this way, a material of the valve body 10 of the globe valve 100 and a material of the valve core 20 of the globe valve 100 are determined. Thus, in the premise of meeting the difference between the Vickers-hardness of the valve body 10 and the Vickers-hardness of the valve core 20, the valve body 10 and the valve core 20 can be locally sourced, which facilitates preparation of the valve body 10 and the valve core 20 and lowers the production cost.

In some embodiments, the valve body 10 is made from a stainless tube or a stainless stick. In this way, a material of the valve body 10 is determined, which can further facilitate production of the valve body 10.

In some embodiments, the valve body 10 is a brass component, and the valve core 20 is an aluminum component. That is, in the embodiments, the valve body 10 is made of brass materials, and the valve core 20 is made of aluminum materials, accordingly. In this way, a material of the valve body 10 of the globe valve 100 and a material of the valve core 20 of the globe valve 100 are determined. Thus, in the premise of meeting the difference between the Vickers-hardness of the valve body 10 and the Vickers-hardness of the valve core 20, the valve body 10 and the valve core 20 can be locally sourced, which facilitates preparation of the valve body 10 and the valve core 20 and lowers the production cost.

It could be understood that the difference between the Vickers-hardness of the valve body 10 and the Vickers-hardness of the valve core 20 is not limited to that the Vickers-hardness of the valve body 10 is greater than the Vickers-hardness of the valve core 20. For the skilled in the art, it could be that a Vickers-hardness of the valve body 10 is smaller than a Vickers-hardness of the valve core 20, and the valve core 20 is capable of abutting against the valve body 10, so as to cause deformation of the valve body 10, which are not repeated herein.

It could be understood that the globe valve 100 100 further includes a sealing valve cover 30 disposed on the valve body 10; and, a sealing ring 40 is embedded at a position between the valve core 20 and the valve body 10, and the sealing ring 40 and the sealing valve cover 30 are capable of allowing assembly and sealing between the valve core 20 and the valve body 10. In this way, when the globe valve 100 is configured for connection and communication between the outdoor unit and the indoor unit (not shown in the figures), that is, when the valve core 20 release the pressing and matching between the valve core 20 and the valve body 10, the sealing valve cover 30 and the sealing ring 40 can be configured to realize sealing of the assembly between the valve core 20 and the valve body 10, so as to ensure the sealing effect of the refrigerant circulates in the globe valve 100.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

The above-described embodiments are only several implementations of the present invention, and the descriptions are relatively specific and detailed, but they should not be construed as limiting the scope of the present invention. It should be understood by those of ordinary skill in the art that various modifications and improvements can be made without departing from the concept of the present invention, and all fall within the protection scope of the present invention. Therefore, the patent protection of the present invention shall be defined by the appended claims.

## Claims

1. A globe valve, comprising a valve body and a valve core disposed in the vale body, **characterized in that**,
a difference is preset between a Vickers-hardness of the valve body and a Vickers-hardness of the valve core, and an end of the valve core extending into the valve body is capable of abutting against and being pressed on the valve body, and configured to cause a deformation of the valve core or the valve body.

2. The globe valve of claim 1, wherein the valve core is provided with a sealing surface, the valve body is provided with a sealing step matching with the sealing surface, and the vale core is capable of driving the sealing surface to abut against and press on the sealing step of the valve body, so as to cause assembly and sealing between the valve core and the valve body.

3. The globe valve of claim 2, wherein the sealing surface is cone-shaped, and the sealing surface is capable of abutting against an edge of the sealing step.

4. The globe valve of claim 1, wherein the difference preset between the Vickers-hardness of the valve body and the Vickers-hardness of the valve core is in a range of 50 hv to 200 hv.

5. The globe valve of claim 1, wherein the Vickers-hardness of the valve body is greater than the Vickers-hardness of the valve core, and the valve body is capable of abutting against the valve core, so as to cause deformation of the valve core.

6. The globe valve of claim 5, wherein the valve body is made of stainless steel and the valve core is made of brass or aluminum.

7. The globe valve of claim 6, wherein the valve body is made from a stainless tube or a stainless stick.

8. The globe valve of claim 5, wherein the valve body is made of brass and the valve core is made of aluminum.

9. The globe valve of claim 5, wherein the Vickers-hardness of the valve body is smaller than the Vickers-hardness of the valve core, and the valve core is capable of abutting against the valve body, so as to cause deformation of the valve body.

10. The globe valve of claim 1, wherein the globe valve further comprises a sealing valve cover disposed on the valve body; and,
a sealing ring is embedded between the valve core and the valve body, and the sealing ring and the sealing valve cover are capable of allowing assembly and sealing between the valve core and the valve body.
